# EUROPEAN PATENT SPECIFICATION

(11) **EP 3 836 330 B1**
(45) Date of publication and mention of the grant of the patent: **16.09.2026**
(21) Application number: 19848508.8
(22) Date of filing: 18.03.2019
(51) Int. Cl.: H02J 3/38

(54) **SYSTEM OPERATION SUPPORTING DEVICE**
VORRICHTUNG ZUR SYSTEMBETRIEBSUNTERSTÜTZUNG
DISPOSITIF DE SUPPORT DE FONCTIONNEMENT DE SYSTÈME

(30) Priority: 10.08.2018 JP 2018151851
(43) Date of publication of application: 16.06.2021
(73) Proprietor: Hitachi, Ltd., Tokyo 100-8280 (JP)
(72) Inventor: KIRIHARA, Kenta, Tokyo 100-8280 (JP); KOKAI, Yutaka, Tokyo 100-8280 (JP); MORISE, Takeshi, Tokyo 100-8280 (JP)
(74) Representative: MERH-IP Matias Erny Reichl Hoffmann Patentanwälte PartG mbB
(86) International application number: PCT/JP2019/011294
(87) International publication number: WO 2020/031416

(56) References cited:
- JP-A- 2017 055 602
- JP-A- 2017 060 355
- US-A1- 2004 207 264

## Description

### Technical Field

The present invention relates to a system operation supporting apparatus, which is preferably applicable to, for example, a system operation supporting apparatus for supporting introduction of distributed power sources to a power system.

### Background Art

In the field of power system, introduction of distributed power sources such as renewable energy accelerates change in the power system. Although such a distributed power source has been assumed to reduce frequency maintenance capability in a prior art power system, there is recently developed a function of the distributed power source contributing to improvement of the frequency maintenance capability. Some countries treat such a function of the distributed power source as regulation capacity that is a part of the power market, which is highly attracting attention.

There is recently disclosed a technology of providing a method of adjusting supply and demand in a power system that can retain a high level of frequency maintenance capability in a case of a change in electric power supply and demand (see Patent Literature 1).

For example, Patent Literature 1 describes a method of adjusting supply and demand in a power system having an SOFC (Solid Oxide Fuel Cell) connected thereto as a power generation facility, including: a first mode of controlling output from the SOFC solely by current control using a PCS (Power Conditioning System) for controlling an inertial response area of the generator in an output response from the power generation facility that generates electric power by rotating a rotor with respect to load variation in a system power line of the power system; and a second mode of controlling the output from the SOFC by the current control using the PCS along with controlling a flow rate of fuel being supplied, for controlling a governor-free area of the generator in the output response and thereafter.

Moreover, there is disclosed a technology of maintaining frequency of a power system by controlling a wind farm (see Patent Literature 2).

For example, Patent Literature 2 discloses a method of controlling a wind farm including: determining an optimum object of control that contributes to frequency maintenance in consideration of a frequency maintenance target and the wake effect in one or more windmills connected to a power system.

### Citation List

### Patent Literature

Patent Literature 1: Japanese Unexamined Patent Application Publication No. 2016-208723
Patent Literature 2: International Publication No. 2016/184915
Patent Literature 3: US 2004/0207264 A1
Patent Literature 3 describes a coordination controller that prevents the deterioration of electric power quality in an electric power system.

### Summary of Invention

### Technical Problem

In Patent Literature **1,** frequency is maintained in the power system by controlling an inverter of the distributed power source. However, because the inverter is susceptible to voltage variation and a distributed power source is disconnected from the power system for an inverter without an FRT (Fault Ride Through) function, the inverter may not be able to contribute to frequency maintenance, but no description is made about this possibility.

In Patent Literature **2,** controlling pitches of a wind farm that is one type of the distributed power source contributes to frequency maintenance. However, as with Patent Literature **1,** no description is made about possibility that the frequency maintenance function may not work.

The present invention has been made in the light of the above, and is intended to provide a system operation supporting apparatus allowing for introduction of distributed power sources in consideration of possibility that the frequency maintenance function may not work.

### Solution to Problem

To address these problems, the invention provides a system operation supporting apparatus for supporting introduction of distributed power sources to a power system, the apparatus including: a distributed power source evaluation unit that determines whether each distributed power source drops or not on the basis of case voltage distribution indicative of voltage distribution of a bus bar in the power system when a prescribed case occurs and a distributed power source grid code indicative of a connection requirement for a prescribed distributed power source; and an output unit that outputs a result determined by the distributed power source evaluation unit.

According to the configuration described above, because the result of determination of whether each distributed power source drops or not in each case is output, it is possible to introduce the distributed power source in consideration of possibility that the frequency maintenance function may not work.

### Advantageous Effects of Invention

The present invention makes it possible to achieve a highly reliable power system.

Problems, configurations, and effects other than those described above will be apparent from Description of Embodiments.

### Brief Description of Drawings

Fig. 1 presents an example of a configuration of a system operation supporting apparatus according to a first embodiment;
Fig. 2 presents an example of a power system facility according to the first embodiment;
Fig. 3 is an example flowchart illustrating a whole process in the system operation supporting apparatus according to the first embodiment;
Fig. 4 presents an image of system state data according to the first embodiment;
Fig. 5 presents an example of an assumed case list according to the first embodiment;
Fig. 6 presents an example of a system model according to the first embodiment;
Fig. 7 is an example flowchart of a case voltage distribution calculation process according to the first embodiment;
Fig. 8 presents an image of the case voltage distribution calculation process according to the first embodiment;
Fig. 9 presents an example of case voltage distribution according to the first embodiment;
Fig. 10 presents an example of a distributed power source grid code according to the first embodiment;
Fig. 11 is an example flowchart of a distributed power source regulation capacity reliability calculation process according to the first embodiment;
Fig. 12 presents an example of distributed power source regulation capacity reliability according to the first embodiment;
Fig. 13 is an example flowchart of a distributed power source regulation capacity calculation process according to the first embodiment;
Fig. 14 presents an image of the distributed power source regulation capacity calculation process according to the first embodiment; and
Fig. 15 presents an example of an output according to the first embodiment.

### Description of Embodiments

In the following, an embodiment of the present invention is described in detail with reference to drawings. The embodiment shows an instance in which a system operation supporting apparatus is applied to operation of a power system.

### (1) First Embodiment

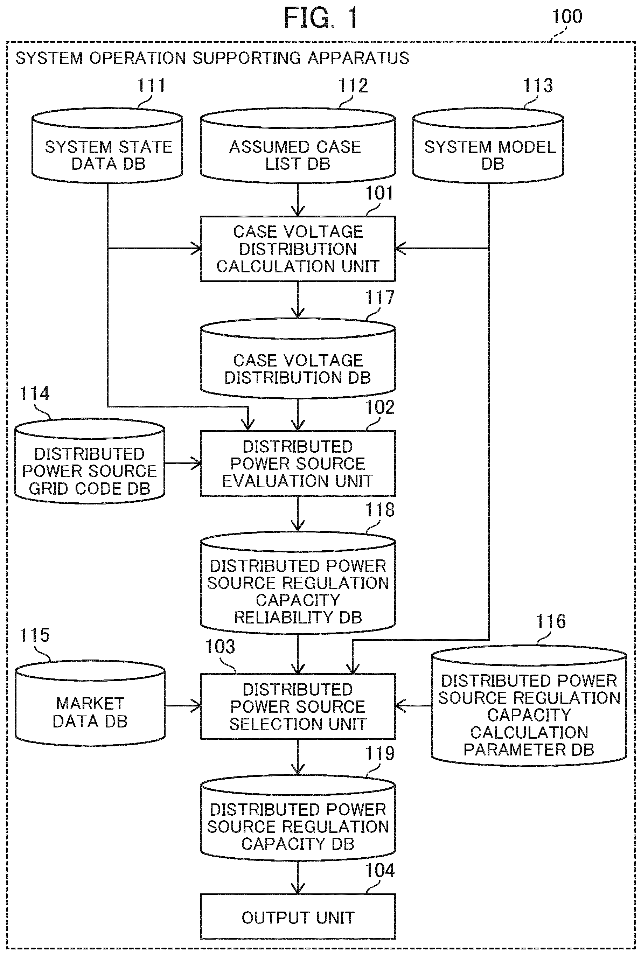

In Fig. 1, generally denoted by 100 is a system operation supporting apparatus according to a first embodiment.

Fig. 1 presents an example of a configuration of the system operation supporting apparatus 100. The system operation supporting apparatus 100 is an apparatus for supporting introduction of distributed power sources to a power system and constituted by a computer system. In Fig. 1, database (DB) owned by the system operation supporting apparatus 100 and internal processing functions are presented in blocks.

The system operation supporting apparatus 100 includes, as processing functions, a case voltage distribution calculation unit 101, a distributed power source evaluation unit 102, a distributed power source selection unit 103, and an output unit 104.

The system operation supporting apparatus 100 includes, as internally owned DB, a system state data DB 111, an assumed case list DB 112, a system model DB 113, a distributed power source grid code DB 114, a market data DB 115, a distributed power source regulation capacity calculation parameter DB 116, a case voltage distribution DB 117, a distributed power source regulation capacity reliability DB 118, and a distributed power source regulation capacity DB 119.

In the configuration described above, the case voltage distribution calculation unit 101 forms the case voltage distribution DB 117 by calculating case voltage distribution using, for example, system state data in the system state data DB 111, an assumed case list in the assumed case list DB 112, and a system model in the system model DB 113 as inputs.

Moreover, the distributed power source evaluation unit 102 forms the distributed power source regulation capacity reliability DB 118 by calculating distributed power source regulation capacity reliability using, for example, the system state data in the system state data DB 111, a distributed power source grid code in the distributed power source grid code DB 114, and case voltage distribution in the case voltage distribution DB 117 as inputs.

Moreover, the distributed power source selection unit 103 forms the distributed power source regulation capacity DB 119 by calculating distributed power source regulation capacity using, for example, market data in the market data DB 115, the system model in the system model DB 113, and a distributed power source regulation capacity calculation parameter in the distributed power source regulation capacity calculation parameter DB 116 as inputs.

Moreover, the output unit 104 outputs (displays, outputs to file, transmits, and the like) data stored in DBs 111 to 119, for example.

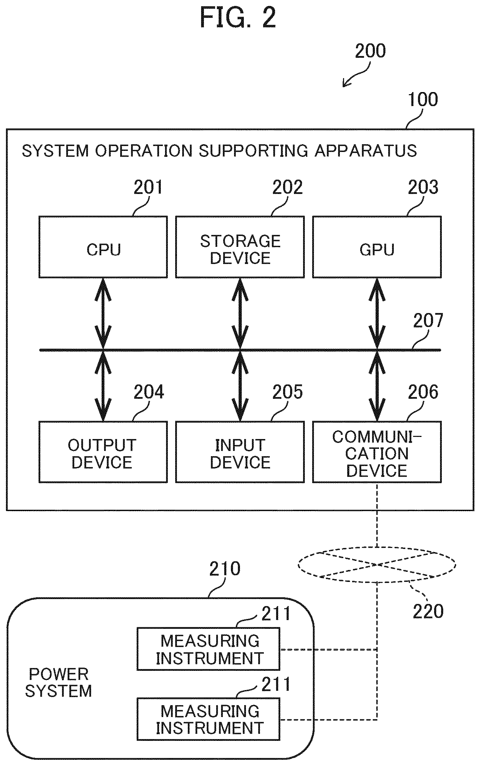

Next, a hardware configuration of the system operation supporting apparatus 100 and a configuration of a power system 210 are described with reference to Fig. 2.

Fig. 2 presents an example of a power system facility 200 that includes the system operation supporting apparatus 100 and the power system 210.

The system operation supporting apparatus 100 is, for example, an information processing equipment (computer) such as a notebook computer and a server, and includes a CPU (Central Processing Unit) 201, a storage device 202, a GPU (Graphics Processing Unit) 203, an output device 204, an input device 205, and a communication device 206. Each component 201 to 206 is connected to a bus 207.

The CPU 201 performs various operations. It is to be noted that the CPU 201 may be configured as one or more semiconductor chips or as a computer such as a computation server.

The storage device 202 is a RAM (Random Access Memory), a ROM (Read Only Memory), an HDD (Hard Disk Drive), or the like, and stores therein a program required for each process, data required for each process and calculation result data (e.g., DB 111 to 119), and image data.

The storage device 202 is a storage unit that stores therein image data to be displayed, calculation temporary data of calculation result data or the like, and calculation result data. For example, necessary image data is generated by the CPU 201 and displayed on the output device 204 (e.g., a display) by the GPU 203.

Functions of the system operation supporting apparatus 100 (such as the case voltage distribution calculation unit 101, the distributed power source evaluation unit 102, the distributed power source selection unit 103, and the output unit 104) may be achieved, for example, by the CPU 201 reading the program on the storage device 202 and executing it (software), by hardware such as a dedicated circuit, or by combination of software and hardware. Moreover, some of the functions of the system operation supporting apparatus 100 may be achieved by another computer communicable with the system operation supporting apparatus 100.

The GPU 203 is used to display the result operated by the CPU 201 on the output device 204. It is to be noted that the GPU 203 may be used for arithmetic processing as with the CPU 201.

The output device 204 is constituted as one or more of a display, a printer device, a voice output device, a mobile terminal, and a wearable terminal, for example.

The input device 205 may include at least one of, for example, a keyboard switch, a pointing device such as a mouse, a touch panel, a tablet terminal, a line-of-sight estimation device, a brain wave converter, a voice instruction device, and the like. The input device 205 may be a user interface other than those described above.

The communication device 206 includes a circuit and a communication protocol for connecting to a communication network 220. The communication device 206 is communicably connected to the power system 210 via the communication network 220.

The power system 210 includes one or more measuring instruments 211. The measuring instrument 211 measures a measurement value at each location in the power system 210, and transmits the measurement value to the communication device 206 of the system operation supporting apparatus 100 via the communication network 220. Here, the measurement value received by the system operation supporting apparatus 100 is temporarily retained and then stored in the system state data DB 111.

Now, examples of the measuring instrument 211 may be a measuring instrument, a measuring device, or the like installed in the power system 210 such as a PMU (Phasor Measurement Unit), a VT (Voltage Transformer), a PT (Power Transformer), a CT (Current Transformer), a telemeter (TM: Telemeter), and the like. It is to be noted that the measuring instrument 211 may be a measurement value aggregation device installed in the power system 210 such as a SCADA (Supervisory Control And Data Acquisition).

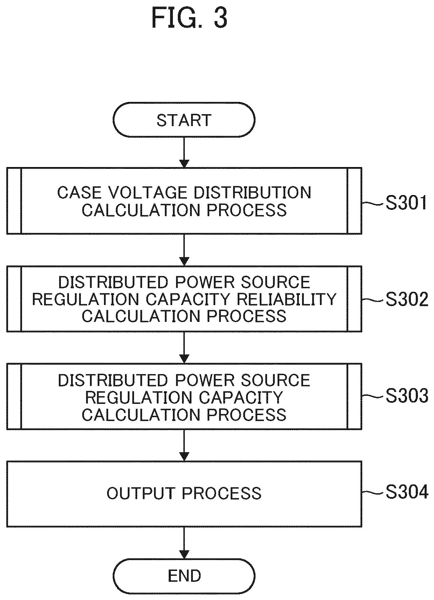

Next, a process in the system operation supporting apparatus 100 is described with reference to Fig. 3.

Fig. 3 is an example flowchart illustrating a whole process in the system operation supporting apparatus 100. The process in the system operation supporting apparatus 100 may be performed at a prespecified time, performed at a predetermined cycle, performed in response to an instruction from a system operator, or performed by any other trigger.

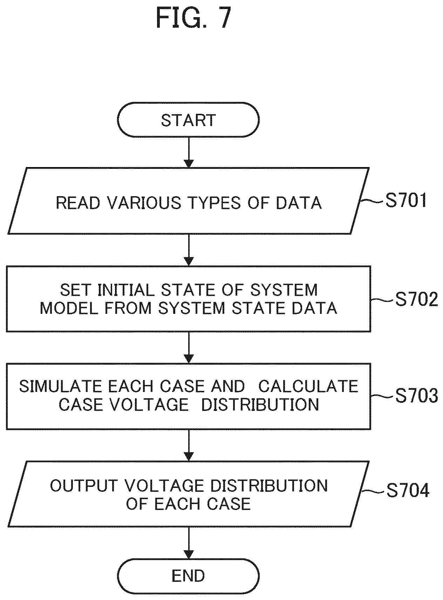

At Step S301, the case voltage distribution calculation unit 101 calculates, for example, voltage distribution in a case assumed in advance by simulation (case voltage distribution calculation process). It is to be noted that the case voltage distribution calculation process will be described later with reference to Fig. 7.

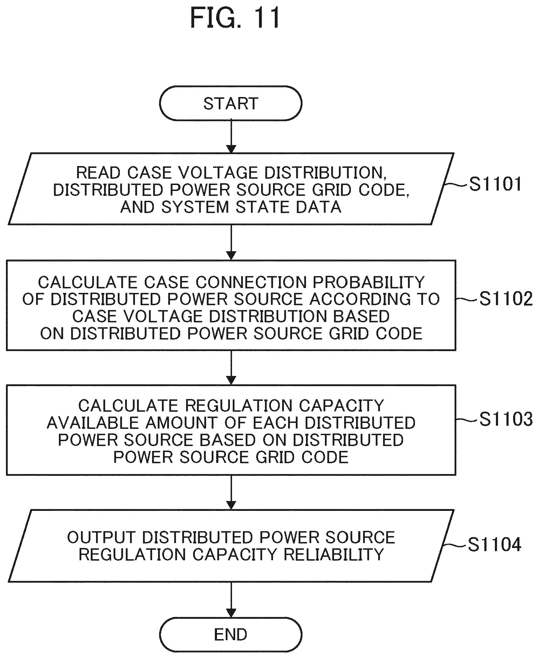

At Step S302, the distributed power source evaluation unit 102 calculates distributed power source regulation capacity reliability, for example (distributed power source regulation capacity reliability calculation process). It is to be noted that the distributed power source regulation capacity reliability calculation process will be described later with reference to Fig. 11.

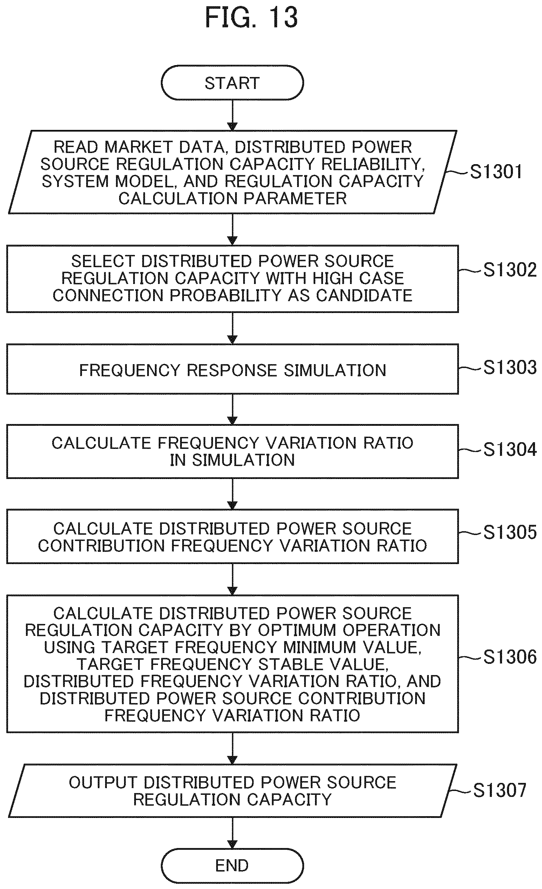

At Step S303, the distributed power source selection unit 103 calculates distributed power source regulation capacity, for example (distributed power source regulation capacity calculation process) . It is to be noted that the distributed power source regulation capacity calculation process will be described later with reference to Fig. 13.

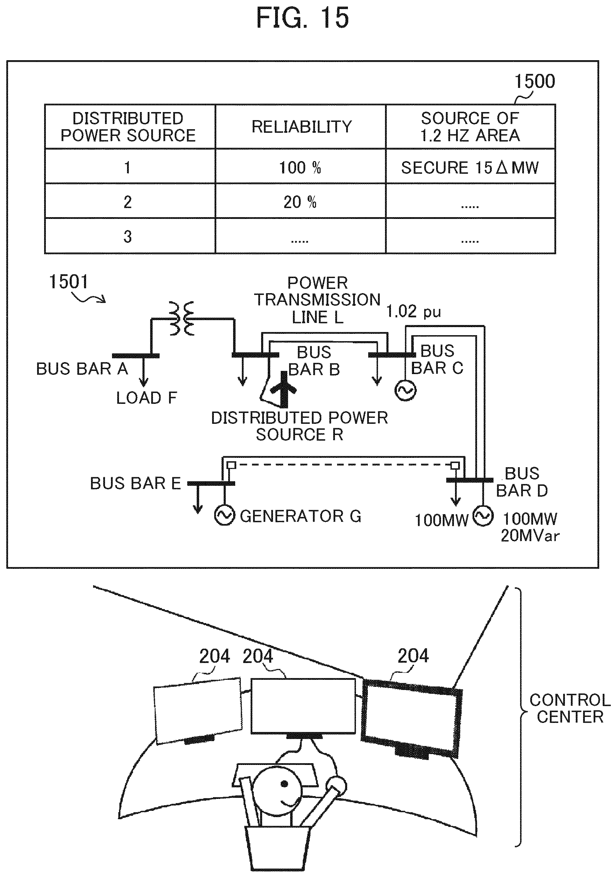

At Step S304, the output unit 104 outputs various information to the output device 204, for example. It is to be noted that an example of the output will be described with reference to Fig. 15.

By performing the processes described above, the system operation supporting apparatus 100 can present a suitable distributed power source, distributed power source regulation capacity, and the like to the system operator of the power system 210.

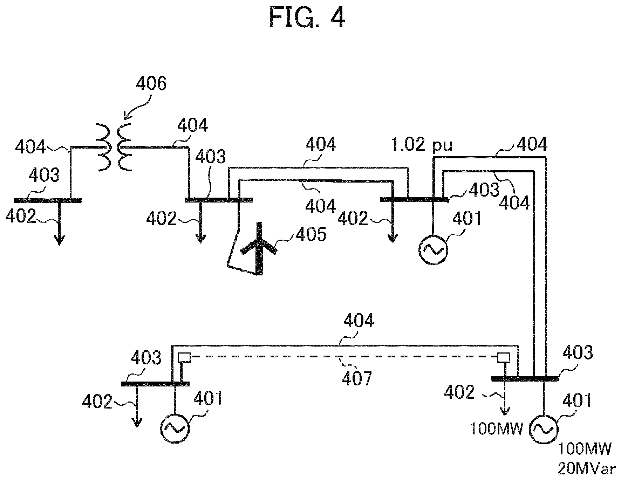

Next, the system state data stored in the system state data DB 111 is described with reference to Fig. 4.

Fig. 4 presents an image of the system state data. The system state data is data indicative of what topology of the power system 210 various types of equipments, loads, and the like are connected to and what characteristics they have.

The system state data includes, for example, a measurement value of the measuring instrument 211 and a status of the measuring instrument 211 as the data from the power system 210. They may be those collected from a plurality of points in the power system 210, and may include various types of information related to the measuring instrument 211. The information may include a date of introduction, a mean error, a manufacturer, a type, a serial number, a product number, operating time, an operation rate, and the like of the measuring instrument 211.

It is to be noted that, used as the system state data may be one or more of a current state of the power system 210, a past state of the power system 210, a predicted state of the power system 210, or a state of the power system 210 assumed for verification.

For example, in the embodiment, used as the system state data are the measurement value of a generator 401 being connected (such as electric power being outputted is 100 MW and reactive power is 20 MVar), the measurement value of a load 402 (such as electric power being used by a user is 100 MW), voltage of a bus bar 403 **(e.g.,** substation), a connection state of a power transmission line 404, an output from a distributed power source 405, a tap position of a transformer, and the like. It is to be noted that the power transmission line 407 indicates an open power transmission line.

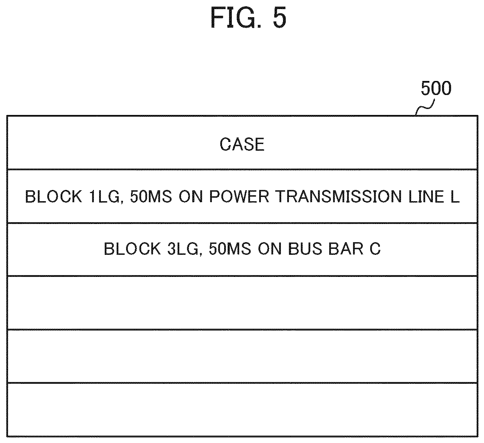

Next, an assumed case list stored in the assumed case list DB 112 is described with reference to Fig. 5.

Fig. 5 presents an example of the assumed case list (assumed case list table 500). The assumed case list table 500 contains a list (assumed case list) of cases indicative of assumed events (in the embodiment, referred to as "assumed case" as appropriate) in the power system 210 of interest. The assumed case list is a regulation indicative of contents that can be stably operated in a case such as, for example, a grounding case of the power transmission line in the power system 210, or a grounding case of the bus bar in the power system 210.

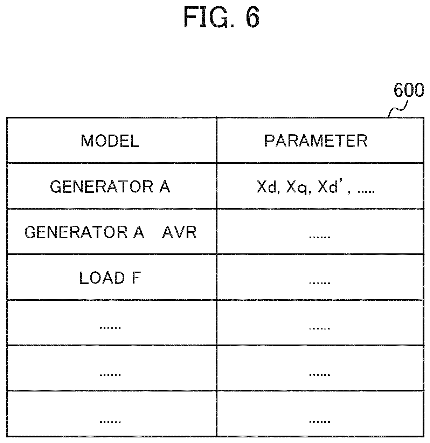

Next, the system model stored in the system model DB 113 is described with reference to Fig. 6.

Fig. 6 presents an example of a system model (system model table 600). The system model table 600 contains information of the system model such as a constant (parameter) of a generator model (e.g., generator A), a constant of a control model (AVR (Automatic Voltage Regulator) of the generator A), a constant of a load model (e.g., load F) , an impedance of a route of the power system 210, and a constant of an equivalent model of the distributed power source. The system model makes it possible to model or even predict a trend of the power system 210 under a certain condition.

Next, the case voltage distribution calculation process is described in detail with reference to Fig. 7.

Fig. 7 is an example flowchart of the case voltage distribution calculation process.

At Step S701, the case voltage distribution calculation unit 101 reads the system state data of the system state data DB 111, the assumed case list of the assumed case list DB 112, and the system model of the system model DB 113.

At Step S702, the case voltage distribution calculation unit 101 sets an initial state of the system model (e.g., currently measured data of the measuring instrument 211) from the system state data.

At Step S703, the case voltage distribution calculation unit 101 simulates each case and calculates the case voltage distribution.

At Step S704, the case voltage distribution calculation unit 101 outputs (e.g., stores in the case voltage distribution DB 117) the calculated case voltage distribution.

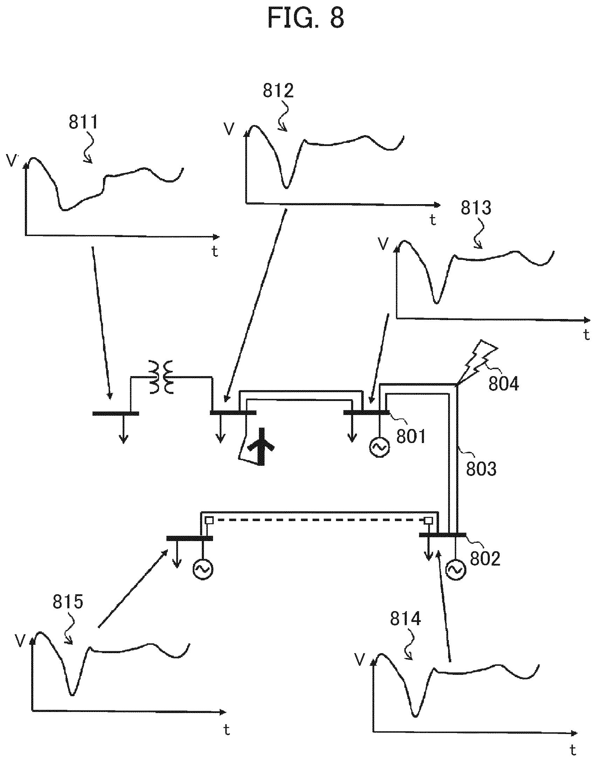

Fig. 8 presents an image of the case voltage distribution calculation process.

The case voltage distribution calculation unit 101 calculates, based on the initial state set at Step S702, the voltage distribution of each case by a stability calculation at Step S703. It is to be noted that a known calculation method can be employed for the stability calculation as appropriate.

Fig. 8 shows a case in which a grounding case 804 occurs in a power transmission line 803 between a bus bar 801 and a bus bar 802. Voltage distributions 811 to 815 show a voltage drop in each bus bar upon occurrence of the grounding case 804. Such voltage distributions 811 to 815 upon occurrence of the grounding case 804 are simulated on the system operation supporting apparatus 100, the voltage distribution in each case is calculated, and the result is held as the case voltage distribution DB 117.

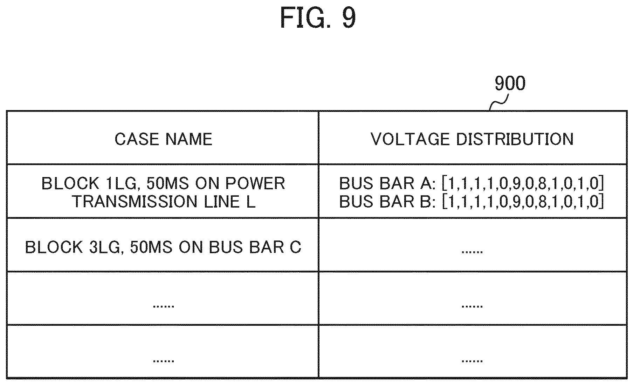

Next, the case voltage distribution to be stored in the case voltage distribution DB 117 is described with reference to Fig. 9.

Fig. 9 presents an example of the case voltage distribution (case voltage distribution table 900).

The case voltage distribution table 900 contains, as described above, the voltage distribution in each case, namely voltage on simulation. A retention method and a format of the case voltage distribution have only to be distinguishable with respect to each case. For example, it may be a table format as shown in Fig. 9 or a data structure with some kind of tag. Calculating the case voltage distribution makes it possible to comprehend, for example, a point at which the voltage drops below a threshold value, a degree of the drop, and time (duration) during which the voltage is lower than the threshold value.

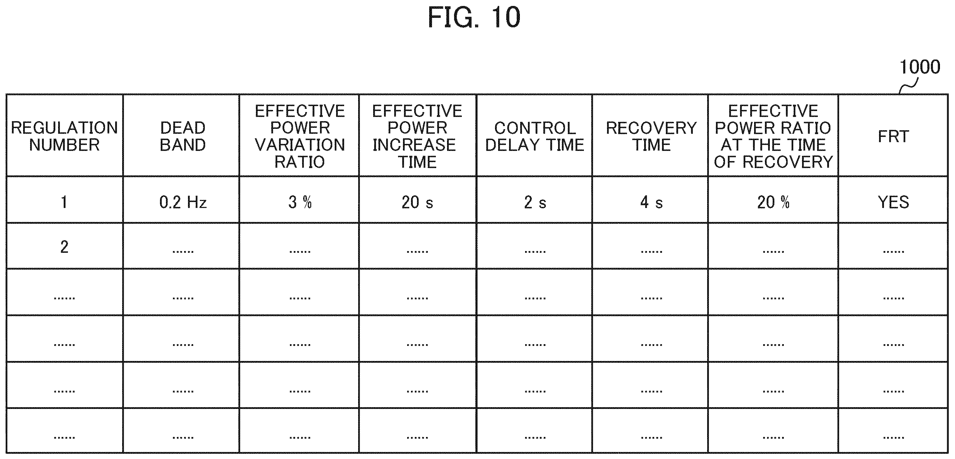

Next, the distributed power source grid code to be stored in the distributed power source grid code DB 114 is described with reference to Fig. 10. The distributed power source grid code indicates a connection requirement of the prescribed distributed power source, and is used in the distributed power source regulation capacity reliability calculation process.

Fig. 10 presents an example of the distributed power source grid code (distributed power source grid code table 1000).

The distributed power source grid code table 1000 contains a regulation (distributed power source grid code) such as a regulation number of the distributed power source to be connected to the power system 210, a fiscal year, a condition of triggering the frequency maintenance capability (dead band), an effective power variation ratio, effective power increase time, control delay time, recovery time after triggering, an effective power ratio at the time of recovery, and presence of resistance to voltage drop (FRT characteristic). Such a regulation is used to calculate reliability of frequency maintenance functions of distributed power sources with different introduction periods as well as contribution thereof.

The regulation number is identification information that allows for identifying the regulation (such as the regulation used when introduced in 2011 or the regulation used when introduced in 2014) of the distributed power source connected to the power system 210. The dead band is information **(e.g.,** 0.2 Hz) for determining how far an operating position should be with respect to a frequency (such as 50 Hz and 60 Hz). The effective power variation ratio indicates a ratio at which the effective power at an operating point can vary. The effective power increase time indicates time in which the effective power at the operating point can be increased. The control delay time indicates time required to vary the effective power at the operating point. The recovery time indicates time that requires standby after varying the effective power at the operating point. The effective power ratio at the time of recovery indicates a ratio of the effective power in the recovery time (such as a ratio with respect to the effective power at the operating point). The FRT characteristic indicates whether or not the distributed power source can continue operating without stopping even if the voltage level drastically drops in a short time upon occurrence of the case or a disturbance occurs that varies frequency (an example of operational continuity information indicative of operational continuity of the distributed power source upon occurrence of the case).

The distributed power source grid code may include some or all of the regulation number, the fiscal year, the dead band, the effective power variation ratio, the effective power increase time, the control delay time, the recovery time, the effective power ratio at the time of recovery, and the FRT characteristics. Moreover, for example, the recovery time, the effective power ratio at the time of recovery, and the like may be estimated from other information.

It is to be noted that the distributed power source grid code may be provided with respect to each distributed power source or with respect to each aggregation of distributed power sources.

Next, the distributed power source regulation capacity reliability calculation process is described in detail with respect to Fig. 11.

Fig. 11 is an example flowchart of the distributed power source regulation capacity reliability calculation process.

At Step S1101, the distributed power source evaluation unit 102 reads the case voltage distribution of the case voltage distribution DB 117, the distributed power source grid code of the distributed power source grid code DB 114, and the system state data of the system state data DB 111.

At Step S1102, the distributed power source evaluation unit 102 calculates a case connection probability of the distributed power source depending on the distributed power source grid code and the case voltage distribution. For example, the distributed power source evaluation unit 102 determines (simulates) whether the distributed power source drops or not (functions or not) based on the distributed power source grid code **(e.g.,** information indicative of within how many seconds the frequency should return to a second proportion even if it drops to a first proportion) and the case voltage distribution with respect to each case and each distributed power source. The distributed power source evaluation unit 102 then calculates in how many cases each distributed power source functions among all cases as the case connection probability (distributed power source regulation capacity reliability).

At Step S1103, the distributed power source evaluation unit 102 calculates the regulation capacity available amount of each distributed power source based on the distributed power source grid code. For example, in a case where the generator currently outputs 100 MW, the distributed power source evaluation unit 102 calculates an effective power variable amount "3 MW" based on the effective power variation ratio "3%" or calculates the effective power estimated value "20 MW" at the time of recovery based on the effective power ratio at the time of recovery "20%".

At Step S1104, the distributed power source evaluation unit 102 outputs (e.g., stores in the distributed power source regulation capacity reliability DB 118) the values calculated at Step S1102 and Step S1103 as the distributed power source regulation capacity reliability.

In the process described above, for example, the distributed power source evaluation unit 102 calculates the effective power variable amount by applying the system state data to the effective power variation ratio, and calculates and outputs the distributed power source regulation capacity reliability including the calculated effective power variable amount, the effective power increase time, and the calculated case connection probability. In this manner, by outputting the effective power variable amount, the effective power increase time, and the case connection probability as a set with respect to each distributed power source, for example, the system operator can easily comprehend an effect of each distributed power source on the effective power in each case. It is to be noted that the distributed power source evaluation unit 102 may output the result of determining whether the distributed power source drops or not with respect to each case. Such an output enables the system operator to, for example, select a reliable distributed power source.

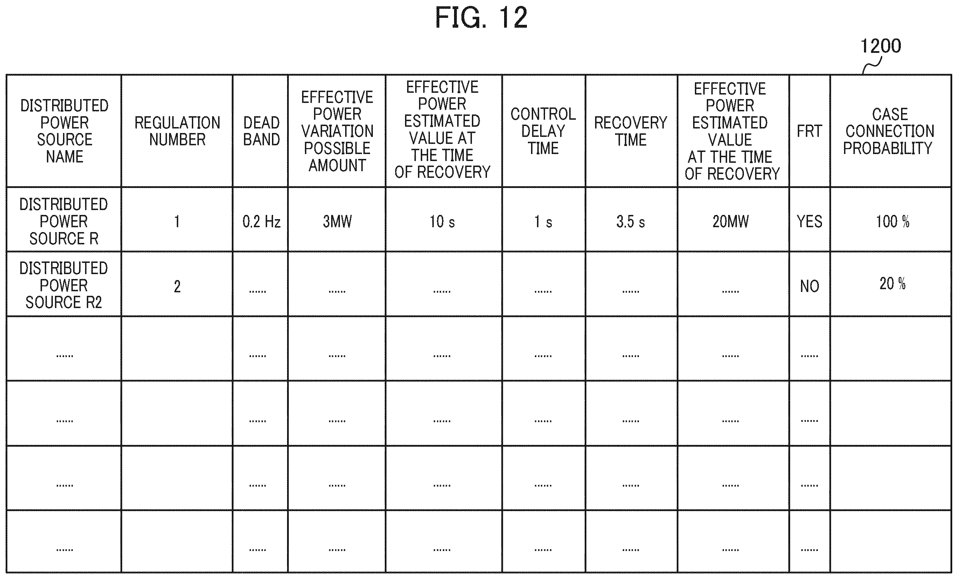

Now, the distributed power source regulation capacity reliability to be stored in the distributed power source regulation capacity reliability DB 118 is described with respect to Fig. 12.

Fig. 12 presents an example of distributed power source regulation capacity reliability (distributed power source regulation capacity reliability table 1200).

For example, the distributed power source regulation capacity reliability includes the case connection probability calculated at Step S1102, the regulation capacity available amount of each distributed power source calculated at Step S1103, and various types of data collated to the distributed power source grid code with respect to each distributed power source (equipment) or with respect to each set of distributed power sources.

The distributed power source regulation capacity available amount calculated at Step S1103 may be the dead band, the effective power variable amount, the effective power increase possible time, the recovery time, the effective power estimated value at the time of recovery, and the like calculated from the distributed power source grid code DB 114 and the system state data DB 111 with respect to each equipment.

Moreover, the case connection probability means a ratio of sustainability of connection in an assumed case. For example, the case connection probability (distributed power source regulation capacity reliability) shown in Fig. 12 indicates that a distributed power source R with FRT has 100% case connection probability because the distributed power source R can supply the regulation capacity to all the assumed cases while a distributed power source R2 without FRT can connect only 20% of the assumed cases.

According to the distributed power source regulation capacity reliability, it is possible to accurately comprehend an amount and probability of effective power to be supplied by each distributed power source, because it is clear that, the higher the case connection probability, the more accurately the distributed power source operates according to the distributed power source regulation capacity available amount.

Next, the distributed power source regulation capacity calculation process is described with reference to Fig. 13.

Fig. 13 is an example flowchart of the distributed power source regulation capacity calculation process.

At Step S1301, the distributed power source selection unit 103 reads the market data of the market data DB 115, the distributed power source regulation capacity reliability of the distributed power source regulation capacity reliability DB 118, the system model of the system model DB 113, and the distributed power source regulation capacity calculation parameter of the distributed power source regulation capacity calculation parameter DB 116.

At Step S1302, the distributed power source selection unit 103 selects distributed power source regulation capacity with case connection probability higher than a predetermined value **(e.g., a** threshold value specified by the user) as a candidate.

At Step S1303, the distributed power source selection unit 103 performs frequency response simulation (generates a base case that models frequency variation in a certain case) using secured regulation capacity **(e.g.,** a measurement value of a generator in the power system 210 at the moment). It is to be noted that a known technique can be employed for the frequency response simulation as appropriate.

At Step S1304, the distributed power source selection unit 103 calculates a derivative of frequency (frequency variation ratio) in the frequency response simulation.

At Step S1305, the distributed power source selection unit 103 calculates the distributed power source contribution frequency variation ratio indicative of an effect of each distributed power source on the frequency variation ratio in the base case.

At Step S1306, the distributed power source selection unit 103 calculates the distributed power source regulation capacity by the optimum operation using the target frequency minimum value and the target frequency stable value included in the regulation capacity calculation parameter, the frequency variation ratio, and the distributed power source contribution frequency variation ratio.

At Step S1307, the distributed power source selection unit 103 outputs **(e.g.,** stores in the distributed power source regulation capacity DB 119) the distributed power source regulation capacity.

Now, the distributed power source regulation capacity calculation parameter stored in the distributed power source regulation capacity calculation parameter DB 116 is described. The distributed power source regulation capacity calculation parameter includes the target frequency minimum value, the target frequency stable value, and an objective function required for calculation of the distributed power source regulation capacity. By using the distributed power source regulation capacity calculation parameter, it is possible to calculate the distributed power source regulation capacity adapted to an object **(e.g.,** to minimize cost, to maximize the number of distributed power sources, to minimize the number of distributed power sources, and the like).

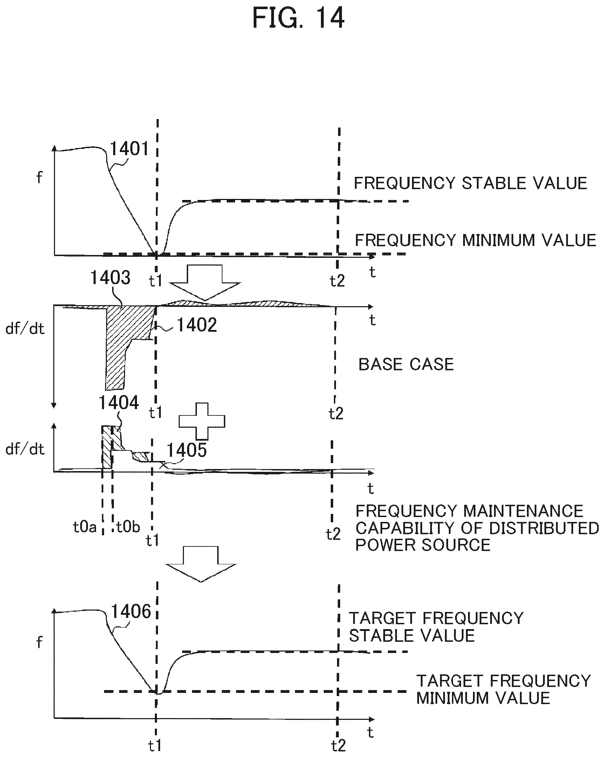

Now, the distributed power source regulation capacity calculation process is described in detail with reference to Fig. 14.

Fig. 14 presents an image of the distributed power source regulation capacity calculation process.

In the distributed power source regulation capacity calculation process, a frequency response simulation result 1401 calculated at Step S1303 based on the state of the power system 210 (one or more of the past state of the power system 210, the current state of the power system 210, or the future state of the power system 210) and the secured regulation capacity is used as the base case. The frequency response simulation result 1401 includes a frequency minimum value where the lowest frequency drops to the bottom in a certain case and a frequency stable value at which the frequency is stabilized owing to the regulation capacity (working of various control systems of the generator).

First, the distributed power source selection unit 103 defines time of reaching the frequency minimum value as frequency minimum value reaching time t1, and defines time of reaching the frequency stable value as frequency stable value reaching time t2.

Next, at Step S1304, the distributed power source selection unit 103 calculates a frequency variation ratio 1402 that approximates a derivative of frequency as shown in Fig. 14. Moreover, an integrated value 1403 of the frequency variation ratio 1402 indicates a frequency deviation from before occurrence of the case.

At Step S1305, the distributed power source selection unit 103 calculates distributed power source contribution frequency variation ratios 1404, 1405 using sensitivity of a varied portion of frequency with respect to the varied portion of the effective power, the varied portion being obtained from the frequency response simulation result 1401. That is, the distributed power source selection unit 103 makes the distributed power source contribution frequency variation ratios 1404, 1405 by converting parameters of the distributed power source regulation capacity reliability specifying supply timing of the effective power and the like as data of the frequency variation ratio by simulation.

At Step S1306, the distributed power source selection unit 103 solves an optimization problem that satisfies two constraint conditions described below. $\begin{matrix}f \left[t1\right] - {f}_{0} \leq {\sum }_{k = 0}^{\frac{τ 1}{Δt}} \frac{{df}_{base}}{dt} \left[k\right] ∗ Δt + {x}_{1} ∗ \frac{{df}_{dra}}{dt} \left[k\right] ∗ Δt ⋯ ⋯ {x}_{n} ∗ \frac{{df}_{dran}}{dt} \left[k\right] ∗ Δt \\ f \left[t2\right] - {f}_{0} \leq {\sum }_{k = 0}^{\frac{τ 2}{Δt}} \frac{{df}_{base}}{dt} \left[k\right] ∗ Δt + {x}_{1} ∗ \frac{{df}_{dra}}{dt} \left[k\right] ∗ Δt ⋯ ⋯ {x}_{n} ∗ \frac{{df}_{dran}}{dt} \left[k\right] ∗ Δt\end{matrix}$

Here, df_{base}/dt [k] is the frequency variation ratio (e.g., frequency variation ratio 1402). df_{dra}/dt [k], df_{drn}/dt [k] and the like are distributed power source contribution frequency variation ratios (e.g., distributed power source contribution frequency variation ratios 1404, 1405). Δt is a time step. x₁ ... xₙ indicate securement states of the regulation capacity of respective distributed power sources. By solving the optimization problem described above with respect to a target objective function set in advance, it is possible to calculate the distributed power source regulation capacity that satisfies the target frequency minimum value and the target frequency stable value to obtain, for example, a frequency response 1406.

In this manner, the distributed power source selection unit 103 selects the distributed power source with the case connection probability higher than the threshold value, calculates the frequency variation ratio in a predetermined case (e.g., base case), selects the frequency variation ratio of the selected distributed power source, and identifies a combination of distributed power sources from among the selected distributed power sources so as to offset the frequency variation ratio in the predetermined case.

More specifically, the target frequency minimum value (e.g., a value higher than the frequency minimum value) and the target frequency stable value (e.g., a value higher than the frequency stable value) are set to increase the frequency maintenance capability, and a combination of the distributed power sources (distributed power source regulation capacity) is obtained that leads to the frequency response satisfying the target frequency minimum value and the target frequency stable value. According to the configuration, for example, the system operator can comprehend the distributed power source that increases the frequency maintenance capability.

Fig. 15 presents an example of an output from the output unit 104.

The output device 204 is viewed by a system operator in a control center, for example. The output device 204 includes a GUI (Graphical User Interface) that displays data such as the system state data DB 111, the assumed case list DB 112, the market data DB 115, and the distributed power source regulation capacity DB 119. These data may be displayed in a table 1500, may be displayed on a power system diagram 1501, may be displayed as a log, or may be displayed on a map.

In the example shown in Fig. 15, the table 1500 presents an example of the distributed power source regulation capacity, indicating that, for example, for a distributed power source "1", a 1.2 Hz source outputting 15 MW can contribute to frequency maintenance.

Here, the output contents are not limited to those shown in Fig. 15. For example, the case connection probability of the distributed power source may be displayed without outputting (calculating) the distributed power source regulation capacity, or the result of determining whether the distributed power source has dropped or not with respect to each case may be displayed without outputting (calculating) the case connection probability of the distributed power source.

Now, effects of the embodiment are described. The regulation capacity of each distributed power source is based on the regulation at the time of introducing individual equipment and does not necessarily function as the regulation capacity, and its performance varies depending on the state of the power system 210 even in a case where there is the regulation capacity. The system operation supporting apparatus 100 enables an arithmetic operation of the distributed power source contributing to the frequency maintenance for operating the power system 210 by calculating the distributed power source regulation capacity reliability of such a distributed power source depending on the voltage distribution with respect to an assumed case and solving the optimization problem based on this distributed power source regulation capacity reliability. Since this clarifies values of the distributed power source contributing to the frequency, for example, the system operator can introduce the distributed power source smoothly when operating the power system 210.

### (2) Other embodiments

It is to be noted that, although the aforementioned embodiment describes the invention as being applied to the system operation supporting apparatus, the invention is not limited thereto, but may be broadly applied to other various systems, apparatuses, methods, and programs.

Moreover, although the aforementioned embodiment describes the output unit 104 as outputting the outcome to the output device 204, the invention is not limited thereto, but the output unit 104 may output the outcome to other output device communicable with the system operation supporting apparatus 100.

Moreover, although the aforementioned embodiment describes various types of data using an XX table and XX DB for convenience of description, the data structure is not limited but may be represented as XX information or the like.

Moreover, information such as the program, the table, or the file implementing each function in the above description may be stored in a storage device such as a memory, a hard disk, and an SSD (Solid State Drive), or a recording medium such as an IC card, an SD card, and a DVD.

Moreover, the aforementioned configuration may be modified, rearranged, combined, or omitted as appropriate without departing from the scope of the claims as annexed.

The aforementioned configuration makes it possible to achieve a highly reliable power system.

### List of Reference Signs

100: system operation supporting apparatus, 101: case voltage distribution calculation unit, 102: distributed power source evaluation unit, 103: distributed power source selection unit, 104: output unit

## Claims

1. A system operation supporting apparatus (100) for supporting introduction of distributed power sources to a power system,
comprising a distributed power source evaluation unit (102) that is configured to determine whether each distributed power source functions or not on the basis of a case voltage distribution of a bus bar in the power system when a predetermined case occurs and a distributed power source grid code indicative of a connection requirement for a predetermined distributed power source; and
an output unit (104) that is configured to output a result determined by the distributed power source evaluation unit,
**characterized in that** the power source grid code is information indicative of within how many seconds a frequency should return to a second proportion even if it drops to a first proportion.

2. The system operation supporting apparatus (100) according to claim 1,
wherein the distributed power source evaluation unit (102) is configured to calculate a proportion of cases in which each distributed power source does not function as a case connection probability.

3. The system operation supporting apparatus (100) according to claim 2,
wherein the distributed power source grid code includes an effective power variation ratio indicative of a ratio at which the effective power at an operating point can vary, effective power increase time indicative of time in which the effective power at the operating point can be increased, and operational continuity information indicative of operational continuity of the distributed power source upon occurrence of the case, and
wherein the distributed power source evaluation unit (102) is configured to calculate an effective power variable amount by applying system state data indicative of a state of the power system to the effective power variation ratio and to calculate distributed power source regulation capacity reliability including the calculated effective power variable amount, the effective power increase time, and the calculated case connection probability.

4. The system operation supporting apparatus (100) according to claim 2, further comprising:
A distributed power source selection unit (103) that is configured to select a distributed power source with the case connection probability calculated by the distributed power source evaluation unit being higher than a threshold value, calculates a frequency variation ratio indicative of a variation ratio of frequency of the power system in a predetermined case, to calculate the frequency variation ratio contributing to frequency of the power system in the predetermined case, and to select a combination of distributed power sources from among the selected distributed power sources so as to offset the frequency variation ratio in the predetermined case.

5. The system operation supporting apparatus (100) according to claim **4,**
wherein the distributed power source selection unit (103) is configured to identify a time of reaching a frequency minimum value where the frequency of the power system drops to the bottom in the predetermined case as frequency minimum value reaching time, to identify a time of reaching a frequency stable value at which the frequency of the power system is stabilized as frequency stable value reaching time, and to calculate a regulation capacity of the distributed power source corresponding to an objective function set in advance assuming the frequency variation ratio in the predetermined case, the frequency variation ratio of the selected distributed power source, the frequency minimum value reaching time and the frequency stable value reaching time identified, and the target frequency minimum value and the target frequency stable value are set in advance to be constraint conditions.

6. The system operation supporting apparatus (100) according to claim 3,
wherein the system state data includes one or more of a current state of the power system, a past state of the power system, a predicted state of the power system, or a state of the power system assumed for verification.

7. The system operation supporting apparatus (100) according to claim 3,
wherein the distributed power source grid code includes one or more of a regulation number of the distributed power source to be connected to the power system, a fiscal year, a condition of triggering the distributed power source, control delay time indicative of time required to vary the effective power at the operating point, recovery time indicative of time that requires standby after varying the effective power at the operating point by triggering the distributed power source, and an effective power ratio at the time of recovery indicative of a ratio of the effective power in the recovery time.

## Patentansprüche

1. Vorrichtung zur Unterstützung des Systembetriebs (100) zum Unterstützen der Einführung verteilter Stromquellen in ein Stromnetz, die umfasst:
eine Einheit zur Beurteilung verteilter Stromquellen (102), die konfiguriert ist, anhand einer Gehäusespannungsverteilung einer Sammelschiene in dem Stromnetz, wenn ein vorgegebener Fall eintritt, und einer Netzvorschrift verteilter Stromquellen, die eine Verbindungsanforderung für eine vorgegebene verteilte Stromquelle angibt, zu bestimmen, ob jede verteilte Stromquelle arbeitet oder nicht; und
eine Ausgabeeinheit (104), die konfiguriert ist, ein Ergebnis auszugeben, das durch die Einheit zur Beurteilung verteilter Stromquellen bestimmt wird,
**dadurch gekennzeichnet, dass**
die Stromquellennetzvorschrift Informationen enthält, die angeben, innerhalb wie vieler Sekunden eine Frequenz zu einem zweiten Anteil zurückkehren sollte, selbst wenn sie auf einen ersten Anteil fällt.

2. Vorrichtung zur Unterstützung des Systembetriebs (100) nach Anspruch 1,
wobei die Einheit zur Beurteilung vertellter Stromquellen (102) konfiguriert ist, einen Anteil von Fällen, in denen jede verteilte Stromquelle nicht arbeitet, als eine Fallverbindungswahrscheinlichkeit zu berechnen.

3. Vorrichtung zur Unterstützung des Systembetriebs (100) nach Anspruch 2,
wobei die Netzvorschrift verteilter Stromquellen ein Variationsverhältnis der effektiven Leistung, das ein Verhältnis angibt, mit dem die effektive Leistung an einem Betriebspunkt variieren kann, eine Anstiegszeit der effektiven Leistung, die eine Zeit angibt, in der die effektive Leistung an dem Betriebspunkt erhöht werden kann, und Informationen über eine Betriebskontinuität, die eine Betriebskontinuität der verteilten Stromquelle beim Auftreten des Falls angeben, enthält und
wobei die Einheit zur Beurteilung verteilter Stromquellen (102) konfiguriert ist, einen variablen Betrag der effektiven Leistung durch Anwenden von Systemzustandsdaten, die einen Zustand des Stromnetzes angeben, auf das Variationsverhältnis der effektiven Leistung zu berechnen und eine Regulierungsfähigkeitsverlässlichkeit verteilter Stromquellen, die den berechneten variablen Betrag der effektiven Leistung, die Anstiegszeit der effektiven Leistung und die berechnete Fallverbindungswahrscheinlichkeit enthält, zu berechnen.

4. Vorrichtung zur Unterstützung des Systembetriebs (100) nach Anspruch 2, die ferner umfasst:
eine Einheit zur Auswahl einer verteilten Stromquelle (103), die konfiguriert ist, eine verteilte Stromquelle auszuwählen, deren Fallverbindungswahrscheinlichkeit, die durch die Einheit zur Beurteilung verteilter Stromquellen berechnet wird, höher als ein Schwellenwert ist, ein Frequenzvariationsverhältnis berechnet, das ein Variationsverhältnis einer Frequenz des Stromnetzes in einem vorgegebenen Fall angibt, um das Frequenzvariationsverhältnis zu berechnen, das zu der Frequenz des Stromnetzes in dem vorgegebenen Fall beiträgt, und eine Kombination verteilter Stromquellen aus den ausgewählten verteilten Stromquellen auszuwählen, um das Frequenzvariationsverhältnis in dem vorgegebenen Fall zu versetzen.

5. Vorrichtung zur Unterstützung des Systembetriebs (100) nach Anspruch 4,
wobei die Einheit zur Auswahl einer verteilten Stromquelle (103) konfiguriert ist, einen Zeitpunkt des Erreichens eines minimalen Frequenzwertes, zu dem die Frequenz des Stromnetzes auf den Tiefstwert in dem vorgegebenen Fall fällt, als den Zeitpunkt des Erreichens des minimalen Frequenzwertes zu identifizieren, um einen Zeitpunkt des Erreichens eines stabilen Frequenzwertes, zu dem die Frequenz des Stromnetzes stabilisiert ist, als den Zeitpunkt des Erreichens des stabilen Frequenzwertes zu identifizieren, und eine Regulierungsfähigkeit der verteilten Stromquelle zu berechnen, die einer Zielfunktion entspricht, die unter der Annahme des Frequenzvariationsverhältnisses in dem vorgegebenen Fall, des Frequenzvariationsverhältnisses der ausgewählten verteilten Stromquelle, des Zeitpunktes des Erreichens des minimalen Frequenzwertes und des identifizierten Zeitpunktes des Erreichens des stabilen Frequenzwertes im Voraus eingestellt wird und der minimale Zielfrequenzwert und der stabile Zielfrequenzwert im Voraus als Einschränkungsbedingungen eingestellt werden.

6. Vorrichtung zur Unterstützung des Systembetriebs (100) nach Anspruch 3,
wobei die Systemzustandsdaten einen aktuellen Zustand des Stromnetzes und/oder einen vergangenen Zustand des Stromnetzes und/oder einen vorhergesagten Zustand des Stromnetzes und/oder einen Zustand des Stromnetzes, der für eine Überprüfung angenommen wird, enthalten.

7. Vorrichtung zur Unterstützung des Systembetriebs (100) nach Anspruch 3,
wobei die Netzvorschrift verteilter Stromquellen eine Regulierungsnummer der verteilten Stromquelle, die mit dem Stromnetz zu verbinden ist, und/oder ein Geschäftsjahr und/oder eine Bedingung zum Auslösen der verteilten Stromquelle und/oder eine Steuerverzögerungszeit, die eine Zeit angibt, die benötigt wird, um die effektive Leistung an dem Betriebspunkt zu variieren, und/oder eine Wiederherstellungszeit, die eine Zeit angibt, die nach dem Variieren der effektiven Leistung an dem Betriebspunkt durch Auslösen der verteilten Stromquelle eine Bereitschaft benötigt, und/oder ein Verhältnis der effektiven Leistung zu dem Zeitpunkt der Wiederherstellung, das ein Verhältnis der effektiven Leistung in der Wiederherstellungszeit angibt, enthält.

## Revendications

1. Appareil de support de fonctionnement de système (100) destiné à supporter une introduction de sources de puissance distribuées à un système de puissance, comprenant
une unité d'évaluation de source de puissance distribuée (102) qui est configurée pour déterminer si chaque source de puissance distribuée fonctionne ou non sur la base d'une distribution de tension de cas d'une barre omnibus dans le système de puissance quand un cas prédéterminé se produit, et d'un code de réseau de source de puissance distribuée indiquant une exigence de connexion pour une source de puissance distribuée prédéterminée ; et
une unité de sortie (104) qui est configurée pour sortir un résultat déterminé par l'unité d'évaluation de source de puissance distribuée,
**caractérisé en ce que**
le code de réseau de source de puissance est une information indiquant en combien de secondes une fréquence devrait retourner à une deuxième proportion même si elle chute à une première proportion.

2. Appareil de support de fonctionnement de système (100) selon la revendication 1,
dans lequel l'unité d'évaluation de source de puissance distribuée (102) est configurée pour calculer une proportion de cas dans lesquels chaque source de puissance distribuée ne fonctionne pas en tant que probabilité de connexion de cas.

3. Appareil de support de fonctionnement de système (100) selon la revendication 2, dans lequel
le code de réseau de source de puissance distribuée inclut un taux de variation de puissance réelle indiquant un taux auquel la puissance réelle à un point de fonctionnement peut varier, un temps d'augmentation de puissance réelle indiquant un temps dans lequel la puissance réelle au point de fonctionnement peut être augmentée, et des informations de continuité de fonctionnement indiquant une continuité de fonctionnement de la source de puissance distribuée lorsque le cas se produit, et
dans lequel l'unité d'évaluation de source de puissance distribuée (102) est configurée pour calculer une quantité variable de puissance réelle par application de données d'état de système indiquant un état du système de puissance au taux de variation de puissance réelle et pour calculer une fiabilité de capacité de régulation de source de puissance distribuée incluant la quantité variable de puissance réelle calculée, le temps d'augmentation de puissance réelle, et la probabilité de connexion de cas calculée.

4. Appareil de support de fonctionnement de système (100) selon la revendication 2, comprenant en outre :
une unité de sélection de source de puissance distribuée (103) qui est configurée pour sélectionner une source de puissance distribuée, la probabilité de connexion de cas calculée par l'unité d'évaluation de source de puissance distribuée étant plus élevée qu'une valeur seuil, qui calcule un taux de variation de fréquence indiquant un taux de variation d'une fréquence du système de puissance dans un cas prédéterminé, pour calculer le taux de variation de fréquence contribuant à une fréquence du système de puissance dans le cas prédéterminé, et pour sélectionner une combinaison de sources de puissance distribuées parmi les sources de puissance distribuées sélectionnées de manière à décaler le taux de variation de fréquence dans le cas prédéterminé.

5. Appareil de support de fonctionnement de système (100) selon la revendication 4,
dans lequel l'unité de sélection de source de puissance distribuée (103) est configurée pour identifier un temps d'atteinte d'une valeur minimum de fréquence où la fréquence du système de puissance chute au plus bas dans le cas prédéterminé en tant que temps d'atteinte de valeur minimum de fréquence, pour identifier un temps d'attente de valeur stable de fréquence auquel la fréquence du système de puissance est stabilisée en tant que temps d'atteinte de valeur stable de fréquence, et pour calculer une capacité de régulation de la source de puissance distribuée correspondant à une fonction objective définie à l'avance en supposant le taux de variation de fréquence dans le cas prédéterminé, le taux de variation de fréquence de la source de puissance distribuée sélectionnée, le temps d'atteinte de valeur minimum de fréquence et le temps d'atteinte de valeur stable de fréquence identifiée, et la valeur minimum de fréquence cible et la valeur stable de fréquence cible sont définies à l'avance pour être des conditions de contrainte.

6. Appareil de support de fonctionnement de système (100) selon la revendication 3,
dans lequel les données d'état de système incluent un ou plusieurs états parmi un état actuel du système de puissance, un état passé du système de puissance, un état prédit du système de puissance, ou un état du système de puissance supposé pour vérification.

7. Appareil de support de fonctionnement de système (100) selon la revendication 3,
dans lequel le code de réseau de source de puissance distribuée inclut un ou plusieurs éléments parmi un numéro de régulation de la source de puissance distribuée devant être connectée au système de puissance, une année fiscale, une condition de déclenchement de la source de puissance distribuée, un temps de retard de commande indiquant un temps requis pour faire varier la puissance réelle au point de fonctionnement, un temps de récupération indiquant un temps qui requiert un temps de veille après la variation de la puissance réelle au point de fonctionnement par déclenchement de la source de puissance distribuée, et un taux de puissance réelle au temps de récupération indiquant un taux de la puissance réelle dans le temps de récupération.
